Europäisches Patentamt

European Patent Office

Office européen des brevets

(11) Veröffentlichungsnummer: **0 651 234 A1**

## (12) EUROPÄISCHE PATENTANMELDUNG

(21) Anmeldenummer: 94116309.9

(22) Anmeldetag: 17.10.94

(51) Int. Cl.6: **G01J 1/44**

(30) Priorität: 30.10.93 DE 4337247
16.05.94 DE 4417124

(43) Veröffentlichungstag der Anmeldung:
**03.05.95 Patentblatt 95/18**

(84) Benannte Vertragsstaaten:
**AT CH DE FR LI NL**

(71) Anmelder: **Licentia Patent-Verwaltungs-GmbH**
**Theodor-Stern-Kai 1**
**D-60596 Frankfurt (DE)**

(72) Erfinder: **Minzberg, Mario, Dr. rer. nat.**
**Johann-Strauss-Strasse 28**
**D-74906 Bad Rappenau (DE)**
Erfinder: **Pähler, Gottfried, Dr. Ing.**
**Burgundenstrasse 50**
**D-74078 Heilbronn (DE)**

(74) Vertreter: **Amersbach, Werner, Dipl.-Ing. et al**
**Licentia Patent-Verwaltungs-GmbH**
**Theodor-Stern-Kai 1**
**D-60596 Frankfurt (DE)**

(54) **Photodetekforanordnung.**

(57) Es wird eine IR-Detektoranordnung mit photoleitenden Detektorelementen beschrieben, bei welchem ein gegen einfallende Strahlung abgeschirmtes Detektorelement als Referenzelement dient und die Signalverarbeitung durch Differenzbildung zwischen den Detektorsignalen und dem Referenzsignal des Referenzelements erfolgt.

Die Erfindung betrifft eine IR-Photodetektoranordnung der im Oberbegriff des Patentanspruchs 1 angegebenen Art.

Durch Absorption von Photonen im infraroten Spektralbereich in photoleitenden IR-Detektoren wird durch Erzeugung zusätzlicher Ladungsträger eine Widerstandsänderung erzeugt.

Der Widerstand eines solchen IR-Photoleiters ist damit ein Maß für die Beleuchtungsintensität der einfallenden Wärmestrahlung.

Wird die Beleuchtungsintensität durch die emittierte Wärmestrahlung eines Objektes bestimmt, dessen Emissivität bekannt ist, so kann im idealen Fall unter Berücksichtigung des optischen Strahlungsganges nach dem Planckschen Strahlungsgesetz die Oberflächentemperatur des Objektes bestimmt werden, falls die Empfindlichkeit (Widerstandsänderung pro eingestrahlte Leistung) des IR-Photoleiters bekannt ist. In der Regel scheitert dieses Verfahren zur berührungslosen Objekttemperaturbestimmung daran, daß der Widerstand und die Empfindlichkeit des IR-Photoleiters selbst stark von der Betriebstemperatur des IR-Photoleiters abhängt, selbst bei minimalen Betriebstemperaturschwankungen.

Aufgrund dieser Eigenschaften eines IR-Photoleiters wird deshalb in der Regel die vom Objekt emittierte Wärmestrahlung z.B. mittels eines mechanischen Choppers moduliert und die Empfindlichkeit des IR-Photoleiters durch Bestrahlung mit einem externen Referenzstrahler bekannter Emissivität und Temperatur (z.B. Copperblatt) periodisch bestimmt (z.B. Ein-Punkt-Korrektur).

Als Nachteil erweist sich bei Modulation der Wärmestrahlung oftmals, daß diese Modulation durch mechanisch bewegte Mechanismen erzeugt wird und die Lebensdauer eines solchen Detektorsystems in der Regel durch diese mechanisch bewegten Mechanismen limitiert ist.

Der vorliegenden Erfindung liegt deshalb die Aufgabe zugrunde, Widerstandsänderungen und Empfindlichkeitsänderungen, verursacht durch Betriebsschwankungen des IR-Photoleiters ganz oder teilweise zu unterdrücken.

Die Erfindung ist im Patentanspruch 1 beschrieben. Die Unteransprüche enthalten vorteilhafte Ausgestaltungen und Weiterbildungen der Erfindung.

Die Erfindung ermöglicht die Bestimmung der absoluten Beleuchtungsintzensität von Wärmestrahlung ohne Einsatz eines externen Referenzstrahlers.

Die Erfindung erlaubt mit der Einführung von IR-Quantendetektoren mit Responsezeiten von < 1µs zugleich, die Temperatur sehr schnell bewegter Objekte zu bestimmen bzw. schnell veränderliche Temperaturen zu verfolgen.

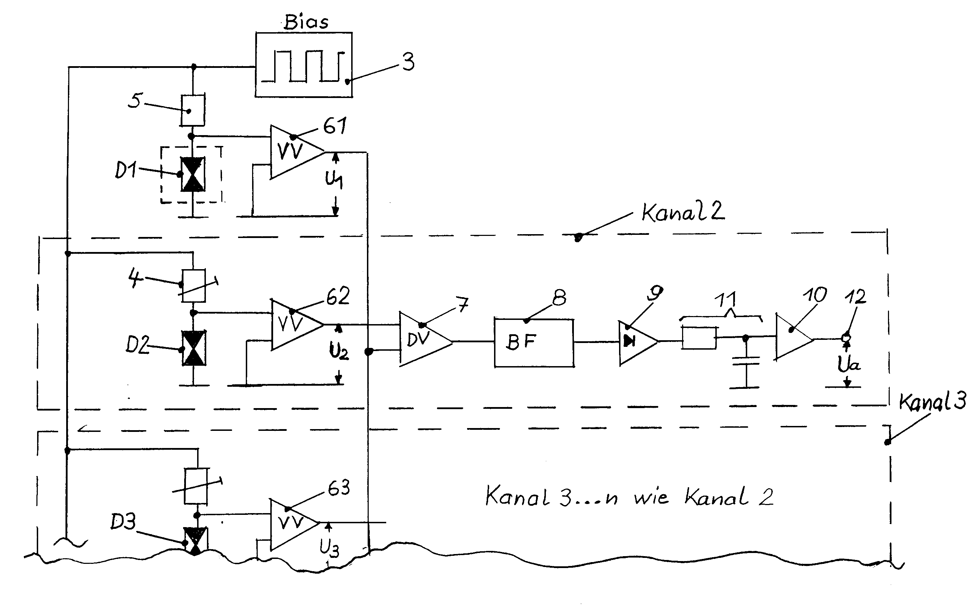

Anhand Abb. 1 wird die Erfindung nachfolgend erläutert. In der Abbildung sind gleiche Teile mit gleichen Ziffern versehen. Ein Element 1 von n gleichartigen IR-Detektorelementen 2 eines photoleitenden Detektorarrays ist in der Weise abgedeckt, daß dieses Element entweder seine eigene Temperaturstrahlung (Abdeckung durch strahlungsundurchlässiges Medium, z.B. Lack) empfängt. Dieses abgedeckte Element 1 liefert ein Referenzsignal und wird im folgenden als Referenzelement bezeichnet. Das gesamte Detektorarray mit Referenzelement D1 und den übrigen Detektorelementen D2, D3... ist vorteilhafterweise thermisch an ein Kältebad angekoppelt. Das Kältebad kann z.B. im Falle eines CMT-Photoleiters die Kaltseite eines thermoelektrischen Kühlers sein. Die Widerstände 5, 4 bilden mit Referenzelement D1 und Detektorelement D2 eine Brückenschaltung ähnlich wie in den Patentanmeldungen P 41 14 592, P 41 14 489 beschrieben, jedoch mit der wesentlichen Änderung, daß in beiden Zweigen der Widerstandsbrücke jeweils ein Detektorelement eingefügt ist, wobei eines das Referenzelement ist, und die Diagonalspannung U1-U2 als Differenzspannung zwischen den Spannungen U1 bzw. U2 an diesen beiden Elementen abgegriffen und einem Differenzverstärker 7 zugeführt ist.

Bei einer fest vorgegebenen Betriebstemperatur der IR-Photodetektoranordnung kann mittels Variation von Widerstand 4 ein fester Grundspannungsanteil von der Signalspannung des Elements D2 abgezogen werden.

Variiert innerhalb eines gewissen Toleranzbereiches die Betriebstemperatur der IR-Photodetektoranordnung bei gleichbleibender Beleuchtungsintensität der Wärmestrahlung, so ändert sich der Grundspannungsanteil wie der Gleichspannungsanteil der Signalspannung aufgrund des gleichen Temperaturganges von Referenzelement- und Detektorelementwiderstand, so daß in Folge die Diagonalspannung unverändert bleibt.

Bei thermoelektrisch gekühlten IR-Detektoren aus photoleitendem HgCdTe liegt der Toleranzbereich typischerweise bei $\Delta T = +/- 2K$ im Betriebstemperaturbereich $T = 180...273$ K.

Es erweist sich als vorteilhaft, die Einzelspannungen über Referenz- und Detektorelement vor der Differenzbildung im Differenzverstärker 7 mittels Vorverstärkern 6 zu verstärken. Eine vorteilhafte Weiterbildung sieht vor, die Brückenschaltung mittels einer modulierten Spannung 3 zu betreiben und eine frequenzselektive Signalauswertung mittels Bandpaßfilterung 8 und Tiefpaß 11 durchzuführen, wie an sich aus den genannten Patentanmeldung P 41 14 489 oder P 41 14 592 bekannt ist.

Die Modulationsfrequenz liegt vorzugsweise im Bereich von 100Hz - 500kHz. Insbesondere ist es vorteilhaft, wenn die Periodendauer der modulierenden Wechselspannung kürzer ist als die Hälfte der Dauer des kürzesten aufzulösenden Beleuchtungsintensitätssprungs (Temperatursprungs).

Der Demodulator 9 bewirkt in Verbindung mit dem Tiefpaß 11, daß aus der Ausgangswechselspannung des Bandpaßfilters 8 eine geglättete Gleichspannung erzeugt wird, aus welcher über einen weiteren Verstärker 10, vorzugsweise mit einstellbarer Verstärkung, eine Ausgangsspannung $U_{a2}$ am Ausgang 12 des Kanals 2 erzeugt wird.

Weitere Kanäle sind gleich aufgebaut und greifen jeweils auf das Referenzelement D1 bzw. die an ihre abgreifbare Referenzspannung zurück. Insbesondere durch den Einsatz der Vorverstärker 61, 62... kann der Referenzzweig mit prinzipiell beliebig vielen IR-Detektorelementen in der beschriebenen Weise verknüpft werden.

Die IR-Detektorelemente und das Referenzelement bestehen vorteilhafterweise aus einem der Materialien $Hg_{1-x}Cd_xTe$, PbTE oder PB Se. Vorzugsweise sind Referenzelement und IR-Detektorelemente in einem einheitlichen Körper aus Detektormaterial monolithisch integriert.

**Patentansprüche**

1. Photoleitende IR-Detektoranordnung zur Messung von Temperaturstrahlung mit mindestens zwei strahlungsempfindlichen Detektorelementen, und mit Einrichtungen zur MEssung und Auswertung der an den Detektorelementen abfallenden Spannungen als Detektorsignal, dadurch gekennzeichnet,
   - daß eines der mindestens 2 vorhandenen, auf konstanter Temperatur gekühlten, Detektorelemente als Referenzelement dient, indem es gegen einfallende Temperaturstrahlung abgeschirmt ist und seine eigene Temperaturstrahlung oder die der Abdeckung detektiert,
   - daß der Temperaturgang des elektrischen Widerstands und der Empfindlichkeit von Referenzelement und übrigen Detektorelement(en) im wesentlichen gleich ist,
   - daß die an dem Referenzelement abfallende konstante Signalspannung als Referenzsignal für die übrigen Detektorsignalspannungen dient und die Signalverarbeitung durch Differenzbildung zwischen den Detektorsignalspannungen und dem Referenzsignal erfolgt.

2. Anordnung nach Anspruch 1, dadurch gekennzeichnet, daß die an die Detektorelemente angelegte Betriebsspannung mit einer Modulationsfrequenz moduliert ist und die Amplitudenvariation frequenzselektiv bei der Modulationsfrequenz ausgewertet wird.

3. Anordnung nach Anspruch 2, dadurch gekennzeichnet, daß die Modulationsfrequenz der Betriebsspannung im Frequenzbereich 100 Hz - 500 kHz liegt.

4. Anordnung nach einem der Ansprüche 2 oder 3, dadurch gekennzeichnet, daß eine Wechselbetriebsspannung angelegt wird, deren Periodendauer weniger als die Hälfte der Dauer des kürzest aufzulösenden Beleuchtungsintensitätssprungs (Temperatursprungs) beträgt.

5. Anordnung nach einem der Ansprüche 1 bis 4, dadurch gekennzeichnet, daß das Referenzelement mit einem strahlungsundurchlässigen lack abgedeckt ist.

6. Anordnung nach einem der Ansprüche 1 bis 4, dadurch gekennzeichnet, daß das Referenzelement mit einer metallischen Abdeckung versehen ist.

7. Anordnung nach einem der Ansprüche 1 bis 6, dadurch gekennzeichnet, daß die Detektorelemente aus Cadmiumquecksilbertellurid ($Hg_{1-x}Cd_xTe$) bestehen.

8. Anordnung nach einem der Ansprüche 1 bis 6, dadurch gekennzeichnet, daß die Detektorelemente aus Bleitellurid (PdTE) bestehen.

9. Anordnung nach einem der Ansprüche 1 bis 6, dadurch gekennzeichnet, daß die Detektorelemente aus Bleiselenid (PdSe) bestehen.

10. Anordnung nach einem der Ansprüche 1 bis 9, dadurch gekennzeichnet, daß die Detektorelemente thermoelektrisch gekühlt sind.

11. Anordnung nach Anspruch 10, dadurch gekennzeichnet, daß die Detektorelemente thermoelektrisch gekühlt sind und die Betriebstemperatur der Detektorelemente im Bereich T = 180 K ...273 K bei einer festen Betriebstemperatur mit einer Genauigkeit besser T = +/- 2 K geregelt ist.

12. Anordnung nach einem der vorhergehenden Ansprüche, dadurch gekennzeichnet, daß Referenzelement und übrige Detektorelemente (D2, D3,...) monolithisch in einem Körper aus Detektormaterial integriert sind.

Bias

3

5

D1

VV 61

$U_1$

Kanal 2

4

D2

VV 62

$U_2$

7 DV

8 BF

9

11

10

12

$U_a$

Kanal 3

D3

VV 63

$U_3$

Kanal 3...n wie Kanal 2

EP 0 651 234 A1

| | Europäisches Patentamt | EUROPÄISCHER RECHERCHENBERICHT | Nummer der Anmeldung |
|---|---|---|---|
| | | | EP 94 11 6309 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE-A-41 14 592 (LICENTIA PATENT VERWALTUNGS GMBH) <br> * das ganze Dokument * <br> --- | 1-3 | G01J1/44 |
| D,A | DE-A-41 14 489 (LICENTIA PATENT VERWALTUNGS GMBH) <br> * das ganze Dokument * <br> --- | 1-3 | |
| A | US-A-3 569 717 (O.A.AWOJOBI ET AL.) <br> * Spalte 1, Zeile 54 - Zeile 69; Abbildung 1 * <br> --- | 1-6,10 | |
| A | GB-A-2 203 834 (DUNACOOP ...) <br> * Seite 2, Absatz 2 * <br> * Seite 3, Absatz 3; Anspruch 1; Abbildungen * <br> ----- | 1 | |
| | | | **RECHERCHIERTE SACHGEBIETE (Int.Cl.6)** |
| | | | G01J |

Der vorliegende Recherchenbericht wurde für alle Patentansprüche erstellt

| Recherchenort | Abschlußdatum der Recherche | Prüfer |
|---|---|---|
| DEN HAAG | 8. Februar 1995 | Scheu, M |

KATEGORIE DER GENANNTEN DOKUMENTE

X : von besonderer Bedeutung allein betrachtet
Y : von besonderer Bedeutung in Verbindung mit einer
      anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
      nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
      Dokument

EPO FORM 1503 03.82 (P04C03)